# DEMANDE DE BREVET EUROPEEN

(11) **EP 2 957 643 A1**
(43) Date de publication de la demande: **23.12.2015**
(21) Numéro de dépôt: 15172247.7
(22) Date de dépôt: 16.06.2015
(51) Int. Cl.: C21D 6/00, C21D 8/06, C21D 8/10, C21D 1/42, C22C 38/02, C22C 38/04, C22C 38/08, C22C 38/12, C22C 38/18, C22C 38/40, C22C 38/44, C22C 38/46

(54) **ACIER POUR PIÈCES MÉCANIQUES À HAUTES CARACTÉRISTIQUES TRAITÉES SUPERFICIELLEMENT, ET PIÈCES MÉCANIQUES EN CET ACIER ET LEUR PROCÉDÉ DE FABRICATION**

(30) Priorité: 16.06.2014 FR 1455467
(71) Demandeur: ASCO Industries, 57300 Hagondange (FR)
(72) Inventeur: Sourmail, Thomas, 54700 Norroy les Pont à Mousson (FR); Smanio, Véronique, 57480 Malling (FR)
(74) Mandataire: Blot, Philippe Robert Emile

(57) **Abrégé**

Acier dont la composition est, en pourcentages pondéraux :
- 0,35% ≤ C ≤ 0,50% ;
- 0,30% ≤ Mn ≤ 1,50% ;
- traces ≤ Cr ≤ 1,50% ;
- 0,05% ≤ Mo ≤ 0,50% ;
-0,15 ≤ Si ≤ 1,20%;
- traces ≤ Ni ≤ 1,0% ;
- traces ≤ Cu ≤ 1,0% ;
- traces ≤ V ≤ 0,35% ;
- traces ≤ Al ≤ 0,10% ;
- traces ≤ B ≤ 0,005% ;
- traces ≤ Ti ≤ 0,10% ;
- traces ≤ Nb ≤ 0,10% ;
- traces ≤ S ≤ 0,15% ;
- traces ≤ Ca ≤ 0,010% ;
- traces ≤ Te ≤ 0,030% ;
- traces ≤ Se ≤ 0,050% ;
- traces ≤ Bi ≤ 0,050% ;
- traces ≤ Pb ≤ 0,100% ;
- traces ≤ N ≤ 0,020% ;

le reste étant du fer et des impuretés résultant de l'élaboration,
et les teneurs en C, Mn et Cr étant telles que 830 - 270 C% - 90 Mn% - 70 Cr%) ≤ 620.

Procédé de fabrication d'une pièce mécanique réalisée en cet acier, et pièce mécanique ainsi obtenue.

## Description

L'invention concerne les aciers pour pièces mécaniques à hautes caractéristiques, obtenues par mise en forme à chaud (notamment forgeage ou laminage), et subissant, dans leur gamme de fabrication, un traitement thermique de durcissement superficiel visant à obtenir une microstructure de dureté élevée sur une profondeur contrôlée.

Les pièces réalisées avec ces aciers peuvent être, à titre d'exemples non limitatifs, des crémaillères usinées à partir de barres laminées puis lopinées, ou des vilebrequins de véhicules automobiles.

Pour réaliser des pièces à hautes caractéristiques mécaniques, il est connu, actuellement d'employer des nuances d'acier dites « micro-alliées » qui, après forgeage ou laminage à chaud, permettent d'obtenir des caractéristiques mécaniques supérieures à celles des nuances ferrito-perlitiques habituelles, sans pour autant nécessiter de traitement thermique supplémentaire.

Ainsi, la nuance 38MnSiV5 (qui contient environ, en % pondéraux, 0,38% de C, 1,25% de Mn, 0,6% de Si, 0,12% de V) est largement utilisée pour la fabrication de vilebrequins d'automobiles, car elle permet, compte tenu des dimensions typiques de la pièce, d'obtenir des résistances à la traction Rm de l'ordre de 900 MPa au mieux. Par ailleurs, la teneur en carbone de 0,38% garantit l'obtention, dans une zone superficielle du produit, de duretés supérieures ou égales à 620-650 HV après l'exécution d'un traitement superficiel de chauffage localisé par induction suivi d'une trempe.

Toutefois, il est également bien connu que les microstructures ferrito-perlitiques ne sont pas les mieux adaptées aux traitements de durcissement local rapides tels que la trempe superficielle par induction. En effet, les plages de ferrite pro-eutectoïde, dont la taille se mesure typiquement en dizaine de µm, constituent des zones fortement appauvries en carbone. Pour retrouver une austénite homogène avant trempe, la diffusion du carbone est donc nécessaire sur les longueurs correspondantes. Si cela ne constitue pas un problème pour les procédés d'austénitisation conventionnels, les temps très courts utilisés pour la trempe induction (ou le durcissement superficiel par laser qui lui est une solution alternative) font que les anciens grains ferritiques peuvent demeurer appauvris en carbone au moment de la trempe. La microstructure résultante est alors hétérogène.

Si les caractéristiques mécaniques dans la masse du 38MnSiV5 (ou d'autres nuances ferrito-perlitiques microalliées) sont jugées insuffisantes pour l'application envisagée, on retient souvent des nuances martensitiques dites « de trempe-revenu », par exemple la nuance 42CrMo4 (qui content environ 0,42% de C, 1% de Cr, 0,2% de Mo). Suite au forgeage, au laminage, ou à tout autre procédé de mise en forme à chaud, les pièces fabriquées avec ces nuances nécessitent un traitement thermique d'austénitisation et de trempe dont les inconvénients financiers ne sont plus à démontrer dans un contexte de coût de l'énergie toujours croissant. Un avantage est néanmoins que les microstructures martensitiques, sauf si elles sont fortement revenues, s'austénitisent beaucoup plus facilement que les structures ferrito-perlitiques.

Il existe aujourd'hui de nombreuses nuances d'acier permettant d'obtenir des caractéristiques mécaniques élevées sur une pièce forgée ou une barre brute de laminage, sans utilisation d'un refroidissement contrôlé ou d'un traitement thermique ultérieur. Ces nuances, décrites dans les documents cités dans le tableau 1, reposent sur l'obtention d'une microstructure majoritairement bainitique après mise en forme. Comme le montre le Tableau 1, elles reposent très largement sur des teneurs en carbone inférieures ou égales à 0,35%. Ces teneurs sont des teneurs pondérales, comme toutes celles qui seront données dans ce texte.

**Tableau 1 : Teneurs en carbone relevées dans des documents relatifs à des nuances d'acier à microstructure majoritairement bainitique**

| Document | Teneurs en C(%) revendiquées | Teneurs en C (%) des exemples |
|---|---|---|
| EP-B-2 245 296 | 0,18-0,25 | 0,19-0,22 |
| EP-A-2 103 704 | 0,20-0,25 | 0,22 |
| EP-A-2 453 027 | 0,15-0,30 | 0,04-0,11 |
| EP-A-1 905 857 | 0,15-0,30 | 0,22 |
| EP-B-1 565 587 | 0,02-0,10 | 0,08 |
| EP-A-1780 293 | 0,08-0,25 | 0,21 |
| EP-A-0 717 116 | 0,05-0,12 | 0,08 |
| EP-A-0 775 756 | 0,05-0,12 | 0,08 |
| EP-A-0 845 544 | 0,06-0,11 | 0,06 |
| WO-A-2009/138586 | 0,10-0,35 | 0,15-0,25 |
| EP-B-0 787 812 | 0,10-0,40 | 0,25-0,28 |
| EP-A-1 426 453 | 0,06-0,35 | 0,06-0,24 |

Deux des exemples précédents se distinguent des autres. Le premier, EP-A-0 717 116, ne concerne en fait pas l'obtention initiale de la microstructure bainitique mais la réponse à un réchauffage partiel ultérieur d'une pièce qui présenterait déjà une telle microstructure. Le deuxième, EP-B- 0 787 812 concerne bien des nuances conduisant à une microstructure bainitique, mais elles présentent d'autres limitations qui seront discutées par la suite.

On rappelle ici brièvement que les traitements de durcissement superficiel concernés par la présente invention sont ceux qui consistent, dans un premier temps, à chauffer localement (et donc souvent rapidement) la zone proche de la surface de la pièce, puis dans un second temps, à la tremper pour obtenir au voisinage de la surface, dans la zone préalablement réchauffée, une couche formée majoritairement de martensite fraîche. La dureté atteinte dans une telle zone est alors essentiellement conditionnée par la teneur en carbone de la nuance d'acier utilisée. On obtient habituellement une dureté Hv de l'ordre de 400 à 500 pour une teneur en C de 0,1%, et une dureté Hv de l'ordre de 900 à 1000 pour une teneur en C de 0,6%, avec, entre ces deux domaines, une relation dureté/teneur en C sensiblement linéaire.

Il est difficile d'obtenir de manière fiable des duretés de l'ordre de 650-700HV pour des teneurs en carbone inférieures à 0,35-0,37 %pds. Or il s'agit précisément des gammes de compositions pour lesquelles il n'existe pas, à l'heure actuelle, de solution dite « bainitique ».

Comme on a pu le voir auparavant, une nuance bainitique ayant de telles teneurs en carbone permettrait soit de procurer des caractéristiques mécaniques à coeur améliorées par rapport aux nuances ferrito-perlitiques microalliées, soit d'obtenir des performances identiques aux nuances trempées-revenues sans toutefois nécessiter de traitement thermique. De plus, la microstructure bainitique se prête bien à l'austénitisation rapide et offre donc un avantage supplémentaire par rapport aux microstructures ferrito-perlitiques, ainsi qu'on le démontrera par la suite.

Ces "solutions bainitiques" sont, cependant, difficiles à obtenir pour des teneurs en carbone élevées.

Certes, il est bien connu de l'homme de métier que, si l'on a la liberté totale du choix de traitement thermique, on peut obtenir l'ensemble des microstructures possibles dans un acier sur la plupart des aciers spéciaux. A titre d'exemple, on peut envisager la transformation isotherme à 400 °C d'un acier au carbone C50 pour obtenir une microstructure bainitique. Il faut pour cela, dans un premier temps, austénitiser le composant, puis le tremper jusqu'à la température de transformation recherchée, à laquelle on le maintient jusqu'à transformation complète avant de le laisser refroidir à température ambiante. Ceci nécessite toutefois, pour éviter la formation de ferrite-perlite, de refroidir la pièce à une vitesse élevée, de l'ordre de 100 °C/s, entre la température d'austénitisation et la température de transformation. Même avec l'utilisation de bains de sel pour la trempe, cette contrainte limite donc la possibilité d'obtention d'une structure bainitique dans l'ensemble de la pièce à des pièces de très petites dimensions (quelques millimètres d'épaisseur).

On voit donc à travers cet exemple, que si l'obtention d'une microstructure bainitique est toujours en principe possible, ce sont les limitations conjointes inhérentes aux procédés de mise en oeuvre et aux dimensions des pièces qui vont très souvent créer des difficultés à obtenir cette structure, et nécessiter une adaptation des nuances d'acier. Ainsi, pour prévenir la formation de ferrite-perlite dans l'exemple précédent, il est nécessaire d'augmenter les teneurs en éléments d'alliage tels que Mn, Cr, Mo. Le risque est alors que la transformation bainitique devienne tellement lente, qu'elle ne soit plus possible lors d'un refroidissement continu. La diminution de la teneur en carbone s'impose alors, car il s'agit de l'élément ayant l'effet le plus prononcé sur la vitesse de transformation de l'austénite en bainite. C'est pour cela que la totalité des solutions présentées dans le Tableau 1 se sont orientées préférentiellement vers des teneurs en carbone inférieures à 0.25%, comme on le voit sur leurs exemples de mise en oeuvre.

Le but de l'invention est donc de proposer une nouvelle nuance d'acier ayant une teneur en carbone compatible avec l'utilisation d'un traitement superficiel par induction suivi d'une trempe (donc ≥ 0,35%), et permettant d'obtenir des caractéristiques mécaniques supérieures après mise en forme à chaud. Pour cela et plus spécifiquement, la nuance d'acier doit permettre d'obtenir une microstructure majoritairement bainitique pour des pièces de dimensions typiques de 20 à 100 mm d'épaisseur par refroidissement naturel après laminage à chaud ou forgeage à chaud, et d'atteindre ainsi des résistances à la traction Rm d'un minimum de 920 MPa (pour un diamètre 80 mm), soit au minimum 10% supérieure à ce qui est obtenu avec les meilleures solutions microalliées ferrito-perlitiques utilisées à l'identique.

On précise qu'on entend par « microstructure majoritairement bainitique », dans le cadre de l'invention, la présence de au plus 20% de martensite et/ou de ferrite-perlite, mais que l'austénite résiduelle est considérée comme partie intégrante de la microstructure bainitique.

On précise de plus que les morphologies de bainites parfois appelées « ferrite aciculaire » ou « bainite intragranulaire » ne sont pas considérées distinctement de la microstructure bainitique pour les aciers de l'invention, et qu'il faut entendre le terme « bainite » de manière générale, à l'exclusion donc de la ferrite-perlite, de la ferrite de Widmanstatten, ou de la martensite.

A cet effet, l'invention a pour objet un acier pour pièces mécaniques à hautes caractéristiques traitées superficiellement, caractérisé en ce que sa composition est, en pourcentages pondéraux :
- 0,35% ≤ C ≤ 0,50% ;
- 0,30% ≤ Mn ≤ 1,50% ;
- traces ≤ Cr ≤ 1,50% ;
- 0,05% ≤ Mo ≤ 0,50% ;
- 0,15 ≤ Si ≤ 1,20%;
- traces ≤ Ni ≤ 1,0% ;
- traces ≤ 5 Cu ≤ 1,0% ;
- traces ≤ V ≤ 0,35% ;
- traces ≤ Al ≤ 0,10% ;
- traces ≤ B ≤ 0,005% ;
- traces ≤ Ti ≤ 0,10% ;
- traces ≤ Nb ≤ 0,10% ;
- traces ≤ S ≤ 0,15% ;
- traces ≤ Ca ≤ 0,010% ;
- traces ≤ Te ≤ 0,030% ;
- traces ≤ Se ≤ 0,050% ;
- traces ≤ Bi ≤ 0,050% ;
- traces ≤ Pb ≤ 0,100% ;
- traces ≤ N ≤ 0,020% ;
le reste étant du fer et des impuretés résultant de l'élaboration,
et les teneurs en C, Mn et Cr étant telles que 830 - 270 C% - 90 Mn% - 70 Cr%) ≤ 620.

Il peut contenir traces ≤ Ni ≤ 0,5%.

Il peut contenir 0,15% ≤ Mo ≤ 0,30%.

Il peut contenir 0,005% ≤ Al ≤ 0,10%.

Il peut contenir 0,0005% ≤ B ≤ 0,005%.

Il peut contenir 0,005% ≤ Ti ≤ 0,03%.

S'il contient 0,0005 à 0,005% de B, il peut contenir traces ≤ N ≤ 0,0080% avec Ti ≥ 3,5 N.

Il peut contenir 0,005% ≤ S ≤ 0,15%.

L'invention a également pour objet un procédé de fabrication d'une pièce mécanique en acier, caractérisé en ce qu'il comporte les étapes suivantes :
- on coule et solidifie un acier dont la composition est conforme à ce qui vient d'être décrit ;
- on réalise un formage à chaud dudit acier solidifié dans le domaine austénitique, notamment par forgeage ou laminage à chaud, pour obtenir un demi-produit formé à chaud ;
- on refroidit le demi-produit formé à chaud à une vitesse lui conférant une structure bainitique renfermant au plus 20% au total de martensite et/ou de perlite et/ou de ferrite ;
- on procède éventuellement à un ou plusieurs usinages pour conférer à la pièce ses dimensions voulues ;
- on procède à un traitement thermique partiel visant à obtenir localement une microstructure martensitique faiblement ou non revenue ;
- on procède éventuellement à une rectification pour conférer à la pièce ses dimensions finales.

Le traitement thermique partiel peut être un traitement superficiel.

Ledit traitement superficiel peut être un traitement superficiel par induction suivi d'une trempe locale.

Le refroidissement du demi-produit formé à chaud peut être suivi par un revenu à 200-400°C pendant 30 min à 8 h.

Le traitement thermique partiel peut être suivi d'un revenu entre 150 et 350°C.

Avant ou après le ou les usinages, on peut procéder à un revenu effectué à 200-400 °C pendant 1-2 heures.

Le refroidissement suivant le formage à chaud du demi-produit peut avoir lieu à l'air calme.

Le refroidissement suivant le formage à chaud du demi-produit peut avoir lieu à l'air pulsé.

L'invention a également pour objet une pièce mécanique en acier, caractérisée en ce qu'elle est obtenue par le procédé précédent.

Il peut s'agir d'une crémaillère usinée à partir d'une barre laminée puis lopinée.

Il peut s'agir d'un vilebrequin forgé, dont les gorges et/ou les manetons et/ou les paliers ont été renforcés au moyen dudit traitement thermique partiel.

Comme on l'aura compris, l'invention repose sur une composition d'acier bien définie, et sur son association à une structure métallurgique très majoritairement bainitique au sens défini précédemment, celle-ci pouvant être obtenue par des moyens simples tels qu'un refroidissement à l'air calme ou pulsé.

L'invention sera mieux comprise à la lecture de la description qui suit, faisant référence aux figures suivantes ;
- La figure 1 qui montre la dureté Hv0,5 mesurée depuis la surface vers le coeur d'une gorge d'un vilebrequin réalisé en un acier de référence de type 38MnSiV5, traité superficiellement par trempe induction, pour deux positions différentes dans la zone traitée, à savoir un palier et un congé de raccordement ;
- La figure 2 qui montre des mesures de duretés comparables à celles de la figure 1 exécutées sur un acier selon l'invention.

En association avec les conditions de procédé précitées, les nuances de la présente invention permettent d'obtenir, d'une part des résistances à la traction Rm supérieures ou égales à 920 MPa au minimum et pouvant atteindre 1150 MPa, et d'autre part des duretés de l'ordre de 650HV dans les zones durcies par un traitement tel que décrit précédemment (trempe superficielle par induction par exemple).

Toutefois, ces nuances offrent, en termes de propriétés mécaniques dans la masse, après leur forgeage et un refroidissement naturel, ou à l'état brut de laminage à chaud après un refroidissement naturel, des rapports Re/Rm relativement bas, variant entre 0,55 et 0,70, traduisant des limites d'élasticité Re significativement inférieures à celles obtenues sur des nuances trempées-revenues de même résistance mécanique. Ceci pourra, si nécessaire pour l'application envisagée de la pièce, être amélioré par l'utilisation d'un revenu à des températures comprises entre 200 et 400 °C, ou, dans le cas où une addition de vanadium a été réalisée à hauteur de 0,1% au minimum, par un revenu à des températures comprises entre 550 et 680 °C.

On va à présent justifier le choix des gammes de composition pour les divers éléments de la nuance selon l'invention. Comme on l'a dit, toutes les teneurs sont données en pourcentages pondéraux.

La teneur en C est comprise entre 0,35 et 0,50%. Cet intervalle, dont on a vu qu'il a jusqu'ici été implicitement considéré comme peu adapté à l'obtention d'une microstructure bainitique lors d'un refroidissement naturel, est imposé par la nécessité d'obtenir une dureté minimale d'environ 600HV dans la zone concernée par le traitement local discuté précédemment (induction, laser, etc.). Au-delà de 0,50%, l'obtention d'une microstructure bainitique homogène devient difficile voire impossible, sans un contrôle très précis du chemin de refroidissement de l'ensemble de la pièce qu'il n'est généralement pas possible d'effectuer sur les installations industrielles de fabrication des pièces principalement concernées par l'invention.

La teneur en Mn est comprise entre 0,30 et 1,50%. Le manganèse est utilisé, conjointement avec le chrome, pour abaisser la température Bs de début de formation de la bainite lors d'un refroidissement continu. Toutefois, Mn contribue de manière importante à la formation de bandes ségrégées qui seraient, dans la gamme de teneurs en carbone requise, particulièrement néfastes. En effet, elles pourront conduire, selon le chemin de refroidissement, à la formation de bandes martensitiques de très haute dureté. Pour cette raison, la teneur maximale en Mn est limitée à 1,5%.

La teneur en Cr est comprise entre des traces et 1,5%. Dans la présente invention, Cr est utilisé au même titre que Mn, pour abaisser la température de début de transformation bainitique Bs.

Les teneurs en C, Mn et Cr doivent, de plus, être telles que 830 - 270 C% - 90 Mn% - 70 Cr% ≤ 620. On notera que cette valeur (notée par la suite Bs') ne reflète pas strictement la valeur de Bs qui sera obtenue, mais elle lui est corrélée, puisque l'effet du Mo notamment en est délibérément exclu. En effet, il est connu que Mo influence de manière bien plus importante la transformation ferrito-perlitique, sur laquelle il a un effet retardant très prononcé, que la transformation bainitique, sur laquelle il a relativement peu d'influence. Ce n'est donc pas sa faible influence sur la température de début de formation de la bainite qui est recherchée, mais uniquement son rôle sur la transformation ferrito-perlitique. On verra plus loin pourquoi Bs' ne doit pas dépasser 620.

Si est compris entre 0,15 et 1,20%. Comme il est bien connu, le silicium peut être utilisé pour éviter la formation de carbures lors de la transformation bainitique. Toutefois, le minimum cité dans la littérature scientifique pour obtenir cet effet est situé à 1,2 ou 1,5%. Comme on le démontrera par la suite, la présente invention utilise, entre autres, la découverte par les inventeurs que cette limite peut, en fait, être significativement plus basse pour les compositions concernées, et notamment de l'ordre de 0,5-0,6 %, voire moins. On verra de plus que le niveau de Si peut être utilisé pour ajuster la valeur de résistance mécanique pour la maintenir dans la gamme attendue. Des additions de Si au-delà de 1.20% ne sont pas souhaitables car elles aggravent les problèmes de ségrégation et de décarburation à la forge ou au traitement thermique, ce qui est particulièrement à éviter dans le cas de l'invention où la teneur en C est relativement élevée, et où les bandes ségrégées peuvent donc se retrouver avec une structure martensitique très dure.

Ni est compris entre des traces et 1,0%, de préférence entre des traces et 0,50%. Il peut être présent uniquement de par son introduction par les matières premières en tant qu'élément résiduel, ou être ajouté en petite quantité pour contribuer à la diminution de la température Bs. Mais sa teneur est limitée à 1%, mieux 0,5%, pour des raisons de coût, cet élément étant onéreux et susceptible de voir son prix fortement fluctuer sur le marché.

Mo est compris entre des 0,050 et 0,50%, de préférence entre 0,15 et 0,30%. Le rôle du molybdène sur la trempabilité est bien établi : il permet d'éviter la formation de ferrite et de perlite mais, pour autant, il ne ralentit pas, ou peu, la formation de la bainite. Il peut donc être ajouté en quantité variable selon le diamètre de la pièce. Un second intérêt du molybdène est de limiter la sensibilité à la fragilité réversible au revenu (voir Bhadeshia, Mater. Sci. Forum, High Performance Bainitic Steels, vol 500-501, 2005). Dans le cas présent, la difficulté à utiliser des teneurs en Mn élevées, à cause de la nécessité de limiter les ségrégations, rend l'utilisation de Mo tout particulièrement nécessaire. La limite supérieure est établie principalement pour des raisons économiques.

V est compris entre des traces et 0,35%. L'ajout de vanadium permet d'une part d'augmenter la trempabilité de manière analogue à ce qui est obtenu avec le Mo, c'est-à-dire avec un ralentissement sensible de la formation de ferrite-perlite et un ralentissement sensiblement moindre de la transformation bainitique. Dans la mesure où V ne précipite pas au cours de la transformation bainitique, il permet d'obtenir un durcissement secondaire et une augmentation très significative de la limite élastique Re lors d'un revenu ultérieur de la pièce tel que décrit précédemment. Son addition est limitée à 0,35% pour des raisons économiques.

Cu est compris entre des traces et 1,0%, il peut éventuellement être utilisé pour contribuer au durcissement mais entraîne des difficultés de mise en oeuvre pour des teneurs supérieures à 1%, notamment la fragilisation par la formation de métal liquide à haute températures, qui peut conduire au problème connu par les lamineurs sous le terme de faïençage ou « peau d'orange ».

Al est compris entre des traces et 0,10%, de préférence entre 0,005 et 0,10%. Al est optionnellement ajouté pour assurer la désoxydation de l'acier et éviter la croissance excessive des grains austénitiques lors d'un maintien à haute température (par exemple un traitement de cémentation) qui serait effectué sur la pièce postérieurement à la mise en oeuvre du procédé selon l'invention.

B est compris entre des traces et 0,005%, de préférence entre 0.0005 et 0.005%. Cet élément optionnel peut être utilisé pour les pièces de gros diamètres afin de garantir l'homogénéité de la structure en limitant la présence de ferrite. Dans ce cas, il peut être préférable de coupler l'addition de B avec une addition de Ti qui capte l'azote pour former de nitrures, et évite ainsi la formation de nitrures de bore. Ainsi tout le bore est maintenu en solution et est donc disponible pour jouer son rôle d'homogénéisateur de la structure.

Ti est compris entre des traces et 0,03%, de préférence entre 0.005 et 0.03%. Comme on vient de le dire, cet élément optionnel est à utiliser principalement pour les nuances au bore. Dans le cas d'une élaboration au bore, où B est d'au moins 5 ppm, on limitera N à au plus 80 ppm et on s'assurera que l'addition de Ti vérifie la relation Ti ≥ 3.5 N.

Nb est compris entre des traces et 0,10%. Cet élément optionnel peut être utilisé pour affiner la structure austénitique après le forgeage ou le laminage à chaud, avec pour conséquence la diminution des tailles de paquets de bainite et l'accélération de la transformation bainitique.

S est compris entre des traces et 0,15%. Comme il est bien connu, cet élément peut, le cas échéant, être laissé à un niveau relativement élevé dans les types d'acier concernés par l'invention, voire même ajouté volontairement, pour améliorer l'usinabilité de l'acier. On lui confère alors une teneur de 0,005 à 0,15%. De préférence, on accompagne alors cette présence significative de S par une addition de Ca jusqu'à 0,010%, et/ou de Te jusqu'à 0,030%, et/ou de Se jusqu'à 0,050%, et/ou de Bi jusqu'à 0,050% et/ou de Pb jusqu'à 0,100%. Il n'est pas spécialement gênant de trouver ces éléments dans l'acier de l'invention même si la teneur en S est basse.

Les autres éléments contenus dans l'acier selon l'invention sont du fer et des impuretés résultant de l'élaboration, présentes à des teneurs habituelles pour les types d'aciers concernés.

Les gammes préférentielles citées pour divers éléments sont indépendantes les unes des autres. Un acier dont la composition se situerait dans une seule ou certaines de ces gammes préférentielles et pas dans les autres serait donc à considérer comme faisant partie de l'invention.

Industriellement, la pièce peut être produite par un procédé de formage à chaud d'un lopin, d'une barre ou d'un bloom présentant la composition décrite précédemment, tel qu'un forgeage à chaud ou un laminage à chaud. Le procédé de fabrication de la pièce peut inclure également l'usinage de barres (ou autres demi-produits) prêtes à l'emploi dans la mesure où la fabrication de ces dernières a été effectuée selon les premières étapes du procédé décrit.

Après la coulée et la solidification par un procédé quelconque (coulée en lingots ou en continu) d'un acier présentant la composition requise, le procédé industriel fait d'abord intervenir une étape de mise en forme à chaud effectuée en phase austénitique (typiquement mais non exclusivement dans l'intervalle 1100-1300 °C), suivie d'un refroidissement naturel. Un des points importants de l'invention est la possibilité d'obtenir des caractéristiques mécaniques élevées sans utilisation de traitements thermiques qui seraient effectués après le forgeage ou le laminage, et sans contrôle particulier très contraignant de la vitesse du refroidissement après mise en forme à chaud, qui peut être effectué naturellement, à l'air calme. Néanmoins, si les installations le permettent, une adaptation du refroidissement pourra dans certains cas être utilisée, soit du fait du diamètre des pièces (avec des pièces de grandes dimensions, un refroidissement trop lent peut conduire à une apparition de ferrite et/ou de perlite en trop grande quantité), soit pour obtenir des caractéristiques mécaniques supérieures à celles qui seraient obtenues par un refroidissement naturel. Un refroidissement par air pulsé peut suffire à atteindre cet objectif. On devra cependant faire attention à ce que le refroidissement ne soit pas trop rapide au point de provoquer une apparition massive de martensite. L'homme du métier pourra déterminer les conditions optimales d'un tel refroidissement pour des pièces de dimensions données, par des modélisations et essais de routine.

De plus, un traitement thermique de revenu à basse température (200 à 400 °C pour des durées de 30 minutes à 8 heures) suivant le refroidissement permet d'obtenir, sur les nuances selon l'invention, une augmentation très significative de la limite d'élasticité sans augmentation de la dureté et sans diminution de la résilience

Selon la nature des pièces concernées et les exigences du fabricant, une ou plusieurs opérations d'usinage peuvent avoir lieu à la suite du forgeage ou du laminage à chaud, et/ou à la suite du revenu éventuel, pour obtenir les dimensions et les caractéristiques de surface précises désirées pour la pièce finale.

Les caractéristiques mécaniques requises étant souvent accessibles par un refroidissement naturel comme on l'a dit, elles sont donc susceptibles dans certains cas d'être atteintes en partant d'un demi-produit (par exemple une barre) forgé ou laminé à chaud prêt à l'emploi, si celui-ci présente déjà la structure métallurgique recherchée (essentiellement bainitique) qui sera décrite plus loin. La composition des aciers de l'invention est telle que la probabilité d'une obtention naturelle de la structure visée après un simple refroidissement à l'air du demi-produit forgé ou laminé à chaud dans des conditions usuelles n'est pas négligeable, si les dimensions du demi-produit conduisent à une vitesse de refroidissement adéquate sur l'ensemble de son volume.

Puis on procède à un traitement thermique partiel, et en particulier superficiel, du demi-produit, visant à obtenir localement une microstructure martensitique faiblement ou non revenue, un exemple d'un tel traitement étant un traitement superficiel par induction, suivi d'une trempe locale et éventuellement d'un revenu entre 150 et 350 °C

. Un tel traitement partiel est pratiqué de manière connue pour le renforcement local de certaines crémaillères de direction ou des gorges, des manetons et/ou des paliers de vilebrequins pour automobiles et poids lourds.

Enfin, on procède éventuellement à une rectification pour conférer à la pièce ses dimensions finales et son état de surface précis.

Dans tous les cas, la teneur en carbone requise selon l'invention garantit l'obtention d'une dureté adéquate dans les zones durcies localement (par induction, mais aussi par laser ou par tout autre procédé fonctionnellement équivalent aboutissant à un durcissement superficiel par chauffage localisé et refroidissement).

Il doit être entendu que la liste des traitements effectués n'est pas forcément exhaustive et que d'autres traitements thermiques ou thermomécaniques ou de mise en forme, par exemple, peuvent s'y ajouter. L'essentiel est que l'opération de mise en forme à chaud et le refroidissement qui suit, effectués sur des aciers ayant la composition spécifiée, aboutissent à la microstructure bainitique à au moins 80% telle que désirée, et que le traitement thermique localisé soit effectué sur cette microstructure, avec pour résultat la formation d'une microstructure martensitique faiblement ou non revenue dans la zone concernée par ce traitement.

On va, à présent, exposer des résultats obtenus avec cinq aciers ayant une composition selon l'invention et un acier de référence qui est du type classique 38MnSiV5 Ces résultats sont obtenus sur des coulées de laboratoire forgées en ronds de 40 mm, ou sur des coulées industrielles forgées ou laminées à chaud en barres de différents diamètres. Les compositions de ces échantillons sont exposées dans le Tableau 2, ainsi que les valeurs du paramètre Bs' tel que défini précédemment, qui est corrélé à la température de début de transformation bainitique Bs mais qui lui est toujours supérieur. Les autres éléments, non précisés dans le tableau 2 ne sont présents qu'à l'état de traces métallurgiquement sans effet.

Les échantillons Ref et Inv.1 proviennent d'élaborations réalisées dans des conditions industrielles terminées par un laminage à chaud en barres de 80 mm. Les autres échantillons sont des échantillons de laboratoire forgés en barres de 40 mm.

**Tableau 2 : Compositions et Bs' des échantillons testés ; les teneurs en Ti, Nb et B sont respectivement de 0.030%, 0.025% et 0.003 % respectivement lorsque ces éléments sont présents**

| | C (%) | Mn (%) | Cr (%) | Si (%) | Ni (%) | Mo (%) | V (%) | Autres | Bs' |
|---|---|---|---|---|---|---|---|---|---|
| Ref. | 0,36 | 1,34 | 0,12 | 0,51 | 0,08 | 0,035 | 0,126 | traces | 603 |
| Inv.1 | 0,37 | 1,31 | 0,71 | 0,23 | 0,22 | 0,078 | 0,122 | B, Nb, Ti | 563 |
| Inv.2 | 0,39 | 0,90 | 0,76 | 0,31 | 0,25 | 0,261 | traces | B, Ti | 591 |
| Inv.3 | 0,38 | 0,91 | 0,75 | 0,59 | 0,26 | 0,251 | traces | B, Ti | 593 |
| Inv.4 | 0,41 | 0,89 | 0,77 | 0,89 | 0,25 | 0,215 | traces | B, Ti | 586 |
| Inv.5 | 0,39 | 0,84 | 0,71 | 0,88 | 0,39 | 0,353 | traces | B, Ti | 599 |

Afin d'obtenir sur tous ces échantillons des microstructures représentatives de l'état d'une pièce forgée, en particulier une taille de grain de 5 à 7 ASTM, et ainsi assurer la validité des comparaisons d'un échantillon à l'autre, on a procédé systématiquement à une austénitisation des barres puis on les a refroidies naturellement à l'air libre et calme, donc sans chercher à contrôler particulièrement leur vitesse de refroidissement. Il doit être clair que cette austénitisation n'est pas elle-même une étape du procédé de l'invention, même s'il ne serait pas exclu d'y procéder industriellement. Mais elle permet d'obtenir les microstructures citées dans le tableau 3, qui correspondent à celles que l'on obtiendrait industriellement à l'issue de la mise en forme à chaud et du refroidissement qui suit tels que décrits précédemment. Ces essais sont donc avant tout représentatifs de ce que procure l'application d'une trempe localisée à des aciers ayant la composition et la microstructure globale exigées par l'invention au moment où ce traitement thermique partiel y est effectué.

Puis, dans tous les cas on a appliqué aux barres un traitement selon l'invention après la mise en forme à chaud. Le Tableau 3 présente les caractéristiques mécaniques (limite d'élasticité Re, résistance à la traction Re, rapport Re/Rm et résilience KCU) mesurées sur les produits ainsi obtenus.

Il convient ici de souligner que les résultats obtenus, en valeur absolue, ne doivent être analysés que dans le contexte précis auquel ils se réfèrent. La hiérarchie entre les nuances examinées demeurera néanmoins identique pour des échantillons ayant tous les mêmes dimensions, qui seraient différentes de celles des exemples cités ici.

**Tableau 3 : Caractéristiques mécaniques des échantillons après austénitisation et refroidissement à l'air libre et calme**

| | Microstructure | Dont austénite résiduelle | Re (MPa) | Rm (MPa) | Re/Rm | KCU (J/cm²) |
|---|---|---|---|---|---|---|
| Ref. | 25% Ferrite + 75% perlite | ≈ 0% | 590 | 885 | 0,67 | -30 |
| Inv.1 | Bainite + 5% martensite | <5% | 705 | 998 | 0,71 | -25 |
| Inv.2 | Bainite 100% | <5% | 644 | 915 | 0,70 | 30 |
| Inv.3 | Bainite 100% | ≈ 20% | 628 | 1010 | 0,62 | 34 |
| Inv.4 | Bainite 100% | ≈ 25% | 636 | 1070 | 0,59 | 41 |
| Inv.5 | Bainite 100% | ≈ 25% | 671 | 1150 | 0,58 | 47 |

Comme on le constate, les aciers correspondant à l'invention utilisant une teneur en silicium de seulement 0,2-0,3% présentent, par rapport, à la référence, soit un avantage faible en termes de caractéristiques mécaniques (cas de Inv. 2), soit un avantage plus prononcé au détriment, toutefois, de l'homogénéité microstructurale (Inv. 1, où on note la présence de martensite sur une barre de diamètre 40 mm refroidie à l'air calme) et de la résilience. Mais on reviendra par la suite sur les avantages que ces nuances présentent, toutefois, dans la cadre d'un traitement de trempe superficielle par induction (ou équivalent).

En ce qui concerne les plus hautes teneurs en Si de l'invention, le tableau 2 démontre clairement la possibilité d'obtenir la suppression des carbures et la formation d'austénite résiduelle pour des teneurs en silicium demeurant sensiblement inférieures aux 1,2 ou 1,5% cités dans la littérature comme permettant d'obtenir cet effet. En effet, seule une présence plus forte de Si distingue les aciers constituant les exemples Inv. 2 et Inv. 3 (Si = 0,31% et 0,59% respectivement). Comme on le constate, la modification de microstructure amenée par cette addition de Si est corrélée à une augmentation très significative de la résistance mécanique Rm, avec dans les deux cas des valeurs très largement supérieures à celle de la référence (jusqu'à +30%). Et les autres propriétés mesurées Re et KCU ne sont pratiquement pas affectées. Des additions de Si encore plus élevées comme dans les exemples Inv.4 et Inv.5 permettent d'élever encore davantage le niveau de Rm.

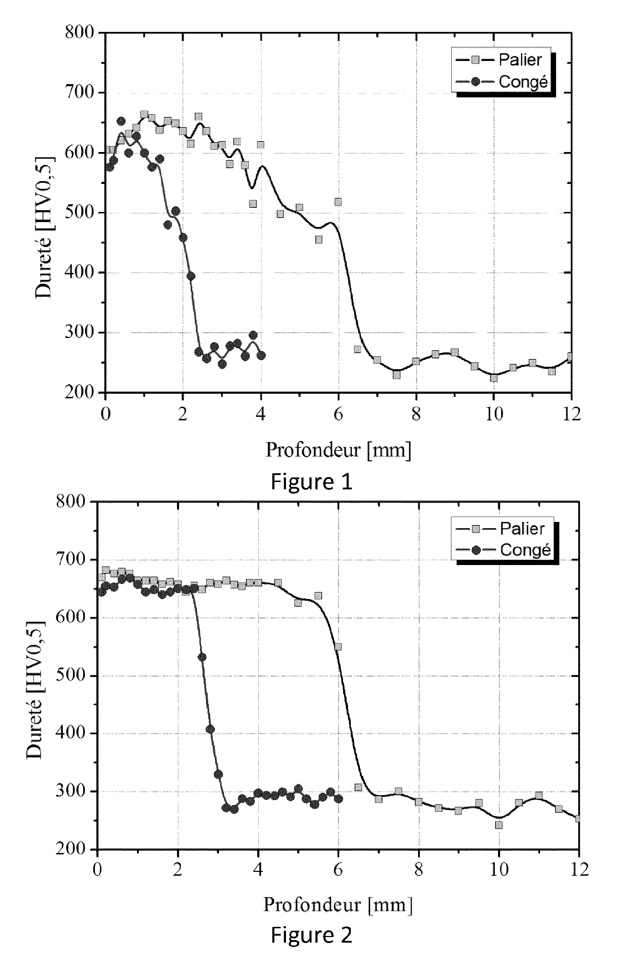

Afin de comparer la réponse à un traitement superficiel de trempe par induction, des éprouvettes ont été traitées sur un équipement industriel conçu pour la trempe par induction des gorges de vilebrequins. Les aciers correspondant à Réf. et Inv. 1 ont été traités dans des conditions identiques, à savoir neuf tours de chauffe à une puissance de 60kW, à raison d'un tour par seconde, puis la microstructure examinée et la profondeur de durcissement ont été mesurées. Les figures 1 et 2 illustrent clairement le bénéfice apporté par la microstructure initiale bainitique (Inv. 1, figure 2) par rapport à la référence ferrito-perlitique (figure 1). En effet, bien que les maxima de dureté soient approximativement identiques, la nuance de référence, ferrito-perlitique, présente une plus grande difficulté d'austénitisation qui se traduit par une profondeur de durcissement réduite et par une hétérogénéité plus marquée.

Des examens métallographiques conduits en microscopie électronique à balayage ont par ailleurs démontré, sur les échantillons de l'acier de référence, que des constituants non-martensitiques existaient à la place des anciens grains ferritiques, et ce même à moins de 0.5 mm de la surface. Ce type de constituant n'est pas identifié sur l'échantillon Inv. 1.

## Revendications

1. Procédé de fabrication d'une pièce mécanique en acier, **caractérisé en ce qu'**il comporte les étapes suivantes :
- on coule et solidifie un acier pour pièces mécaniques à hautes caractéristiques traitées superficiellement, dont la composition est, en pourcentages pondéraux :
- 0,35% ≤ C ≤ 0,50% ;
- 0,30% ≤ Mn ≤ 1,50% ;
- traces ≤ Cr ≤ 1,50% ;
- 0,05% ≤ Mo ≤ 0,50% ;
- 0,15 ≤ Si ≤ 1,20% ;
- traces ≤ Ni ≤ 1,0% ;
- traces ≤ Cu ≤ 1,0% ;
- traces ≤ V ≤ 0,35% ;
- traces ≤ Al ≤ 0,10% ;
- traces ≤ B ≤ 0,005% ;
- traces ≤ Ti ≤ 0,10% ;
- traces ≤ Nb ≤ 0,10% ;
- traces ≤ S ≤ 0,15% ;
- traces ≤ Ca ≤ 0,010% ;
- traces ≤ Te ≤ 0,030% ;
- traces ≤ Se ≤ 0,050% ;
- traces ≤ Bi ≤ 0,050% ;
- traces ≤ Pb ≤ 0,100% ;
- traces ≤ N ≤ 0,020% ;
le reste étant du fer et des impuretés résultant de l'élaboration,
et les teneurs en C, Mn et Cr étant telles que 830 - 270 C% - 90 Mn% - 70 Cr%) ≤ 620.
- on réalise un formage à chaud dudit acier solidifié dans le domaine austénitique, notamment par forgeage ou laminage à chaud, pour obtenir un demi-produit formé à chaud ;
- on refroidit le demi-produit formé à chaud à une vitesse lui conférant une structure bainitique renfermant au plus 20% au total de martensite et/ou de perlite et/ou de ferrite ;
- on procède éventuellement à un ou plusieurs usinages pour conférer à la pièce ses dimensions voulues ;
- on procède à un traitement thermique partiel visant à obtenir localement une microstructure martensitique faiblement ou non revenue ;
- on procède éventuellement à une rectification pour conférer à la pièce ses dimensions finales.

2. Procédé selon la revendication 1, **caractérisé en ce que** l'acier contient traces ≤ Ni ≤ 0,5%.

3. Procédé selon la revendication 1 ou 2, **caractérisé en ce que** l'acier contient 0,15% ≤ Mo ≤ 0,30%.

4. Procédé selon l'une des revendications 1 à 3, **caractérisé en ce que** l'acier contient 0,005% ≤ Al ≤ 0,10%.

5. Procédé selon l'une des revendications 1 à 4, **caractérisé en ce que** l'acier contient 0,0005% ≤ B ≤ 0,005%.

6. Procédé selon l'une des revendications 1 à 5, **caractérisé en ce que** l'acier contient 0,005% ≤ Ti ≤ 0,03%.

7. Procédé selon les revendications 5 et 6 prises ensemble, **caractérisé en ce que** traces ≤ N ≤ 0,0080% et **en ce que** Ti ≥ 3,5 N.

8. Procédé selon l'une des revendications 1 à 7, **caractérisé en ce que** 0,005% ≤ S ≤ 0,15%.

9. Procédé selon l'une des revendications 1 à 8, **caractérisé en ce que** le traitement thermique partiel est un traitement superficiel.

10. Procédé selon l'une des revendications 1 à 9, **caractérisé en ce que** ledit traitement thermique partiel est un traitement superficiel par induction suivi d'une trempe locale.

11. Procédé selon l'une des revendications 1 à 10, **caractérisé en ce que** le refroidissement du demi-produit formé à chaud est suivi par un revenu à 200-400°C pendant 30 min à 8 h.

12. Procédé selon l'une des revendications 1 à 11, **caractérisé en ce que** le traitement thermique partiel est suivi d'un revenu entre 150 et 350°C.

13. Procédé selon l'une des revendications 1 à 12, **caractérisé en ce qu'**avant ou après le ou les usinages, on procède à un revenu effectué à 200-400 °C pendant 1-2 heures.

14. Procédé selon l'une des revendications 1 à 13, **caractérisé en ce que** le refroidissement suivant le formage à chaud du demi-produit a lieu à l'air calme.

15. Procédé selon l'une des revendications 1 à 13, **caractérisé en ce que** le refroidissement suivant le formage à chaud du demi-produit a lieu à l'air pulsé.

16. Pièce mécanique en acier, **caractérisée en ce qu'**elle est obtenue par le procédé selon l'une des revendications 1 à 15.

17. Pièce mécanique selon la revendication 16, **caractérisée en ce qu'**il s'agit d'une crémaillère usinée à partir d'une barre laminée puis lopinée.

18. Pièce mécanique selon la revendication 16, **caractérisée en ce qu'**il s'agit d'un vilebrequin forgé, dont les gorges et/ou les manetons et/ou les paliers ont été renforcés au moyen dudit traitement thermique partiel.
